# EUROPEAN PATENT SPECIFICATION

(11) **EP 1 367 610 B1**
(45) Date of publication and mention of the grant of the patent: **20.02.2008**
(21) Application number: 03012377.2
(22) Date of filing: 30.05.2003
(51) Int. Cl.: H01C 7/02

(54) **PCT composition, method of making the same, and thermistor body obtained therefrom**
PTC Zusammensetzung, Verfahren zur Herstellung derselben und daraus erhaltener Thermistorkörper
Composition pour une thermistance à coefficient de température positif CTP (PTC), procédé d'obtention de la composition et corps de thermistance obtenue à partir de cette composition

(30) Priority: 29.05.2002 JP 2002156142
(43) Date of publication of application: 03.12.2003
(73) Proprietor: TDK Corporation, Tokyo 103-8272 (JP)
(72) Inventor: Tosaka, Hisanao, Tokyo 103-8272 (JP); Yamashita, Yasuhide, Tokyo 103-8272 (JP); Handa, Tokuhiko, Tokyo 103-8272 (JP); Kobayashi, Katsumi, Tokyo 103-8272 (JP)
(74) Representative: Grünecker, Kinkeldey, Stockmair & Schwanhäusser Anwaltssozietät

(56) References cited:
- JP-A- 2001 102 203
- US-A- 5 801 612
- US-B1- 6 299 801

## Description

### Field of the Invention

The present invention relates to a PTC composition, employed as a temperature sensor or an overcurrent protection device, having a positive temperature coefficient of resistivity (hereinafter simply referred to as PTC), whose ohmic value increases as temperature rises, a method of making the same, and a thermistor body obtained therefrom.

### Related Background Art

A composition in which an electrically conductive substance is dispersed into a crystalline polymer matrix has been known to exhibit a PTC behavior (see U.S. Patent Nos. 3,243,753 and 3,351,882). Compositions exhibiting such a behavior (hereinafter also referred to as PTC compositions when necessary) have recently been demanded to be employed in protection devices for lithium ion batteries and common circuits, such as those in cellular phones. Therefore, it is necessary for the PTC compositions to have a highheat resistance and a high stability. However, these conventional PTC compositions have been problematic in terms of their low heat resistance and storage stability.

Therefore, improvements in storage stability and heat resistance of a PTC composition by crosslinking the crystalline polymer matrix contained therein have been under study (see U.S. Patent No. 3,269,862 and Japanese Patent Application Laid-Open No. 2000-82602).

Known as the crosslinking method are (1) chemical cross-linking by an organic peroxide, (2) aqueous crosslinking by a silane coupling agent and water, and (3) radiation crosslinking upon irradiation with an electron beam (see for example US-A-6 299 801, JP-A-2002 01 45130 and US-A-5 801 612.

Among them, the chemical crosslinking has been problematic in that, since the composition is shaped into an article having a predetermined form and then must be subjected to heat treatment at a temperature higher than the melting point of the polymer matrix included therein, the form of the article is hard to maintain, there is a possibility of the article thermally deteriorating, and so forth.

The aqueous crosslinking has been problematic in that the degree of crosslinking may vary among batches, the process takes a longer period of time since the article shaped from the composition must be immersed in hot water for a long time, substances such as organotin compounds which may affect environments must be used as a catalyst, and so forth.

On the other hand, the radiation crosslinking enables crosslinking with no difference in the degree of crosslinking among batches by irradiating an article shaped from a relatively low-density PTC composition using carbon black as an electrically conductive powder.

### SUMMARY OF THE INVENTION

In the case where the composition has a high density or the article shaped from the composition at the time of radiation crosslinking is thick, however, the heat resistance and thermal shock resistance of the article may decrease when the article is subjected to the radiation crosslinking. This seems to be because the polymer matrix contained in the composition is not uniformly crosslinked.

It is an object of the present invention to provide a thermistor device excellent in heat resistance and thermal shock resistance even when it has a high density, a PTC composition to become a material therefor, and a method of making the same.

A first aspect of the present invention relates to a shaped article comprising a composition as defined in claim 1. The PTC composition contained (a) crosslinked polymer matrix having a gel fraction of at least 10%, and (b) an electrically conductive substance, wherein an article shaped therefrom yields an electric resistance of at least 50 mΩ at 25°C after being placed in an environment repeating 200 times of a temperature change between -40°C and +85°C, the article exhibiting no thermal deformation when placed on a hot plate at 200°C for 5 minutes.

Another aspect of the present invention relates to a method of making a shaped article comprising a PTC composition of claim 1 comprising the steps of preparing an article shaped from a mixture containing a polymer matrix, an electrically conductive substance, and an organic compound having a melting point lower than that of the polymer matrix; and crosslinking the mixture by irradiating the article by a dose of 40 to 300 kGy with an electron beam having an acceleration voltage of at least 250 kV.

Still another aspect of the present invention relates to a PTC thermistor body as defined in claim 16, comprising a composition containing (a) a crosslinked polymer matrix having a gel fraction of at least 10%, and (b) an electrically conductive substance; the PTC thermistor body yielding an electric resistance of at least 50 mΩ at 25°C after being placed in an environment repeating 200 times of a temperature change between -40°C and +85°C, and exhibiting no thermal deformation when placed on a hot plate at 200 °C for 5 minutes.

Still another aspect of the present invention relates to a thermistor device as defined in claim 24 comprising (1) a PTC thermistor body as defined in claim 16 comprising a composition containing (a) a crosslinked polymer matrix having a gel fraction of at least 10%, and (b) an electrically conductive substance; the PTC thermistor body yielding an electric resistance of at least 50 mΩ at 25°C after being placed in an environment repeating 200 times of a temperature change between -40°C and +85°C, and exhibiting no thermal deformation when placed on a hot plate at 200°C for 5 minutes; and (2) respective electrodes formed on both sides of the PTC thermistor body.

According to these aspects, the present invention can provide a thermistor device excellent in heat resistance and thermal shock resistance even when it has a high density, a PTC composition to become a material therefor, and a method of making the same.

Other aspects and effects of the present invention will become apparent from the detailed description given hereinafter and attached claims.

### BRIEF DESCRIPTION OF THE DRAWINGS

Fig. 1 is a schematic sectional view showing the thermistor device in accordance with an embodiment of the present invention;

Fig. 2 is a plan view of Fig. 1;

Fig. 3 is a graph showing resistance vs. temperature (R-T) characteristics of thermistor device samples in accordance with Examples and Comparative Examples; and

Fig. 4 is a graph showing resistance vs. temperature (R-T) characteristics of thermistor device samples in accordance with Examples and Comparative Examples.

### DETAILED DESCRIPTION OF THE PREFERRED EMBODIMENTS

In the following, various embodiments of the present invention will be explained in detail with reference to the drawings. Similar parts among the drawings will be referred to with the same numerals.

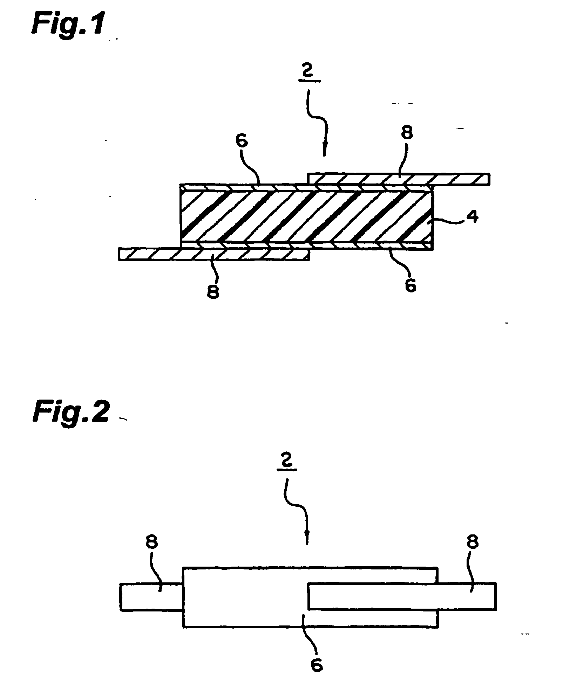

First, reference will be made to Fig. 1 showing the thermistor device in accordance with an embodiment of the present invention and Fig. 2 illustrating its plan view.

Thermistor Device

As shown in Figs. 1 and 2, the thermistor device 2 in accordance with this embodiment comprises a thermistor body 4. Electrodes 6, 6 are formed on both sides of the thermistor body 4, respectively. External electrode terminals 8, 8 are connected to the electrodes 6, 6, respectively.

Thermistor Body

The thermistor body 4 normally has a thickness of about 100 to 1,000 µm and a body density of at least 2.5 g/cm³, preferably at least 3 g/cm³. The thermistor body 4 also has a specific resistance of 1 Ω-cm or less, preferably not greater than 0.5 Ω-cm. Here, the "body density" refers to a value obtained when the weight of a shaped article such as a thermistor body is divided by the volume of the article including its open pores and closed pores.

The thermistor body 4 is constituted by a PTC composition. The PTC composition in accordance with the present invention contains, at least, a polymer matrix and an electrically conductive substance. In this specification, the term "composition" refers to a product generated when a mixture is crosslinked. The "mixture" refers to not only a simply kneaded product, but also a shaped article in which the kneaded product is formed into a sheet, a film, or the like, and a mode in which both sides of the shaped article are formed with electrodes.

Polymer Matrix

The polymer matrix has a gel fraction of at least 10%. The polymer matrix having a gel fraction of less than 10% is not fully crosslinked, thus exhibiting a poor heat resistance and a lower storage stability. The gel fraction is measured as follows:

(1) The polymer matrix subjected to crosslinking while in a state containing nickel particles is immersed in toluene and boiled therein. As a consequence, its uncrosslinked part melts in toluene, thereby yielding a sol.

(2) The resulting liquid is subjected to filtering. As a result, the uncrosslinked part turned into the sol in toluene drops through the filter, whereas only the crosslinked polymer matrix not turned into the sol remains as a gel. When the known mass of nickel particles is subtracted from the total mass of the polymer matrix containing the nickel particles, the mass of polymer matrix excluding the nickel particles is obtained.

(3) The mass of the remaining polymer matrix is measured. The gel fraction (%) is calculated when thus obtained mass is divided by the above-mentioned mass of polymer matrix.

Usually, it is preferred that the polymer matrix have a melting point of 70°C to 200°C. However, when used together with a low molecular weight organic compound, the polymer matrix preferably has a melting point higher than that of the low molecular weight organic compound by at least 30°C, by at least 30°C but not more than 110°C in particular, in order to prevent flowage, deformation of the thermistor body 4, and the like due to melting of the low molecular weight organic compound during operation.

The polymer matrix may be either crystalline or amorphous. Examples of the polymer matrix include polyolefins, e.g., polyethylene, ethylene/vinyl acetate copolymer, polyalkyl acrylates such as polyethyl acrylate, and polyalkyl (meth)acrylates such as polymethyl (meth)acrylate; halogen-containing polymers, e.g., fluorine-containing polymers such as polyvinylidene fluoride, polytetrafluoroethylene, polyhexafluoropropylene, and their copolymers, and chlorine-containing polymers such as polyvinyl chloride, polyvinylidene chloride, chlorinated polyvinyl chloride, chlorinated polyethylene, chlorinated polypropylene, and their copolymers; polystyrene; and thermoplastic elastomers. Polyolefins may be copolymers. Among them, polyolefins are used preferably. More preferably, linear, low-density polyethylene prepared by polymerization over a metallocene catalyst, e.g., low-density polyethylene having a density of less than 0.95 g/cm³ is used. Here, the metallocene catalyst refers to a coordinated ionic polymerization catalyst mainly using a metallocene catalyst as a transition metal compound and mainly using methylaluminoxane as an organic metal compound.

The melt flow rate (MFR) of linear, low-density polyethylene prepared by polymerization over a metallocene catalyst is defined by ASTM-D1238. The MFR is preferably 4 (g/10 min) or less. When the MFR exceeds 4 (g/10 min), the melt viscosity of polymer matrix becomes too low, whereby the stability of each characteristic of the polymer matrix tends to deteriorate. Though not specified in particular, the lower limit of the MFR is usually about 0.1 (g/10 min) .

One kind of the polymer matrix may be used alone, or two or more kinds thereof may be used in combination. Preferably, among them, linear, low-density polyethylene having an MFR of 4 (g/10 min) or less prepared by polymerization over a metallocene catalyst is used alone.

The number average molecular weight Mn of polymer matrix is preferably on the order of 10, 000 to 50, 000, more preferably on the order of 18,700 to 36,800.

Electrically Conductive Substance

Preferably, the electrically conductive substance used in the present invention has the form of electrically conductive particles with spiky protrusions. The electrically conductive particles with spiky protrusions are formed by primary particles each having sharp protrusions. Each spiky protrusion has a conical form with a height which is 1/3 to 1/50 of the particle size of the primary particle. A plurality of, usually about 10 to 500, spiky particles exist in one primary particle. The electrically conductive particles with spiky protrusions are preferably made of a metal, nickel in particular.

Though such electrically conductive particles may be in a powder form in which primary particles exist individually, the primary particles preferably form secondary particles each composed of about 10 to 1,000 primary particles connected in series like a chain. Those in powder and chain forms may mingle with each other as well. A specific example of powder-like electrically conductive particle is a nickel powder with a spherical form as a whole having spiky protrusions. This kind of nickel powder is commercially available, for example, under the product name of INCO type 123 nickel powder (manufactured by Inco Limited) . These commercially available products have an average particle size of about 3 to 7 µm, a body density of 1.8 to 2.7 g/cm³, and a specific surface area of about 0.34 to 0.44 m²/g.

A specific example of chain-like electrically conductive particle is a filamentary nickel powder. This kindof nickel powder is commercially available, for example, under the product name of INCO type 210, 255, 270, and 287 nickel powder (manufactured by Inco Limited), among which INCO type 210 and 255 are preferable in particular. The primary particles included in the chain-like electrically conductive particles preferably have an average particle size of 0.1 µm or greater, 0.5 to 4.0 µm in particular, most preferably 1.0 to 4.0 µm. In the electrically conductive particles, 50% by weight or less of primary particles having an average particle size of at least 0.1 µm but less than 1.0 µm may be mixed with primary particles having an average particle size of 1.0 to 4 . 0 um. The electrically conductive particles have a body density of about 0.3 to 1.0 g/cm³, and a specific surface area of about 0.4 to 2.5 m2/g. The average particle size was measured by Fisher subsieve method.

See Japanese Patent Application Laid-Open No. HEI 5-47503 and U.S. Patent No. 5,378,407 for such electrically conductive particles.

As the electrically conductive substance, carbon type electrically conductive particles such as carbon black, graphite, carbon fiber, metal-coated carbon black, graphitized carbon black, and metal-coated carbon fiber; metal particles in the form of sphere, flake, fiber, and the like; foreign- metal-coated metal particles such as silver-coated nickel; ceramic type electrically conductive particles such as tungsten carbide, titanium nitride, zirconium nitride, titanium carbide, titanium boride, and molybdenum silicide; electrically conductive potassium titanate whiskers disclosed in Japanese Patent Application Laid-Open Nos. HEI 8-31554 and 9-27383; and the like may be added to those mentioned above. Preferably, such electrically conductive particles are contained by 25 wt% or less in electrically conductive particles having spiky protrusions.

Low-Melting Organic Compound

Preferably, in addition to the polymer matrix, the PTC composition further contains an organic compound (hereinafter referred to as low-melting organic compound) having a melting point lower than that of the polymer matrix . The PTC composition is not only required to have a higher heat resistance, a higher thermal shock resistance, and a lower electric resistance, but also is demanded to provide a thermistor device operable at a lower temperature. By regulating the content of the low-melting organic compound, the PTC composition in the present invention can easily adjust a temperature at which the ohmic value changes drastically in its resistance vs. temperature characteristic, thus making it possible to provide a thermistor device operable at a lower temperature as well.

The organic compound used in the present invention has a molecular weight of about 1,000 or less, and is preferably a crystalline one having a molecular weight of 200 to 800. Though the organic compound can be used without any restriction as long as its melting point mp is lower than that of the above-mentioned polymer matrix, it is preferably solid at ambient temperature of about 25°C.

Examples of the low-melting organic compound include waxes, e.g., petroleum waxes such as paraffin wax and microcrystal line wax, and natural waxes such as vegetable waxes, animal waxes, and mineral waxes; fats and oils known as fats or solid fats; and crystalline resins.

Crystalline resins refer to resins whose melting points can be observed in thermal measurement, and are distinguished from amorphous resins whose melting points cannot be observed. Examples of crystalline resins include polyolefin type crystalline resins represented by the group consisting of polyethylene type crystalline resins such as linear or branched high-density polyethylene and low-density polyethylene, polypropylene type crystalline resins such as linear or branched high-density polypropylene and low-density polypropylene, polymethylpentene, polybutene, polymethylbutene, polymethylhexene, polyvinylnaphthalene, and the like; polyester type crystalline resins represented by the group consisting of polyethylene terephthalate (PET), polybutylene terephthalate (PBT), polyethylene naphthalate, aromatic polyester, and the like; polyamide type crystalline resins represented by the group consisting of nylon-6, nylon-66, nylon-12, polyamide imide, and the like; fluorine-containing crystalline resins represented by the group consisting of polyvinylidene fluoride, polytetrafluoroethylene, and the like; and others such as polyvinylidene chloride, polyacrylonitrile, syndiotactic polystyrene,polyoxymethylene,polyphenylenesulfide (PPS), polyether ether ketone (PEEK), cellulose, acetal resin, chlorinated polyether, ethylene/vinyl acetate copolymer, and liquid crystal polymer (aromatic polycyclic condensation polymer). The crystalline resins encompass not only those wholly crystallized, but those partly crystallized. The crystalline resins in the latter case normally have a degree of crystallinity of 10% to 80%, preferably 15% to 70%.

When the PTC thermistor device is desired to be operated at a low temperature of 80°C to 100°C, for example, it will be sufficient if an organic compound having a melting pointmpof at least 40°C but less than 100°Cas the low-melting organic compound. The organic compound satisfying this condition is selected from paraffin wax, microcrystalline wax, fatty acid, fatty acid ester, fatty acid amide, fatty acid ester, fatty acid amide, crystalline resin, and the like. One kind of the organic compound may be used alone, or two or more kinds may be used in combination. Among them, the crystalline resin is preferably used as the organic compound, and ethylene homopolymer is used more preferably. Ethylene homopolymer has a melting point on the order of 85°C to 100°C and a density of about 0.96 g/cm³.

Additive

For preventing the polymer matrix from thermally deteriorating, the PTC composition may contain an antioxidant. Phenols, organosulfurs, phosphites (organophosphorus compounds), and the like are used as the antioxidant.

The PTC composition may contain additives imparting favorable pyroconductivity thereto. Examples of these additives include silicon nitride, silica, alumina, and clay (mica, talc, and the like) disclosed in Japanese Patent Application Laid-Open No. SHO 57-12061; silicon, silicon carbide, silicon nitride, beryllia, and selenium disclosed in Japanese Patent Publication No. HEI 7-77161; and inorganic nitrides, magnesium oxide, and the like disclosed in Japanese Patent Application Laid-Open No. HEI 5-217711.

Whennecessary, the PTC composition may contain, for example, inorganic solids such as titanium oxide, iron oxide, zinc oxide, silica, magnesium oxide, alumina, chromium oxide, barium sulfate, calcium carbonate, calcium hydroxide, and lead oxide disclosed in Japanese Patent Application Laid-Open No. HEI 5-226112 and barium titanate, strontium titanate, and potassium niobate each having a high relative dielectric constant disclosed in Japanese Patent Application Laid-Open No. HEI 6-68963 in order to improve the durability thereof.

The PTC composition may contain boron carbide disclosed in Japanese Patent Application Laid-Open No. HEI 4-74383 and the like in order to improve the voltage endurance thereof.

When necessary, the PTC composition may contain alkali titanate hydrate disclosed in Japanese Patent Application Laid-Open No. HEI 5-74603; titanium oxide, iron oxide, zinc oxide, and silica disclosed in Japanese Patent Application Laid-Open No. HEI 8-17563; and the like in order to improve the strength of an article such as the PTC thermistor body 4 formed from the PTC composition.

When necessary, the PTC composition may contain alkali halide and melamine resin disclosed in Japanese Patent Publication No. SHO 59-10553; benzoic acid, dibenzylidene sorbitol, and metal benzoate disclosed in Japanese Patent Application Laid-Open No. HEI 6-76511; talc, zeolite, and dibenzylidene sorbitol disclosed in Japanese Patent Application Laid-Open No. HEI 7-6864; sorbitol derivatives (gelling agents) and asphalt disclosed in Japanese Patent Application Laid-Open No. HEI 7-263127; sodium bis(4-t-butylphenyl)phosphate; and the like as a crystalline nucleating agent.

When necessary, the PTC composition may contain alumina and magnesia hydrate disclosed in Japanese Patent Publication No. HEI 4-28744, metal hydrates and silicon carbide disclosed in Japanese Patent Application Laid-Open No. SHO 61-250058, and the like as an arc adjusting/regulating agent.

When necessary, the PTC composition may contain IRGANOX MD102 (manufactured by Ciba-Geigy Corp.) disclosed in Japanese Patent Application Laid-Open No. HEI 7-6864 and the like as a metal harm inhibitor.

When necessary, the PTC composition may contain antimony trioxide and aluminum hydroxide disclosed in Japanese Patent Application Laid-Open No. SHO 61-239581, magnesium hydroxide disclosed in Japanese Patent Application Laid-OpenNo. HEI 5-74603, and organic compounds or polymers containing a halogen such as 2,2-bis(4-hydroxy-3,5-dibromophenyl)propane, polyvinylidene fluoride (PVDF), phosphorus-containing compounds such as aluminum phosphate, and the like as a flame retardant.

In addition, the PTC composition may contain zincsulfide, alkaline magnesium carbonate, aluminum oxide, calcium silicate, magnesium silicate, aluminosilicate clay (kaolinite, montmorillonite, and the like), glass powder, glass flake, glass fiber, calcium sulfate, and the like.

Electrode

The electrode 6 is constituted by a metal foil containing Ni, or the like. The electrode 6 usually has a thickness of 25 to 35 µm.

External Electrode Terminal

The external electrode terminal 8 is made of a material containing Ni. The external electrode terminal 8 usually has a thickness of about 100 to 125 µm.

Method of Making Thermistor Body

A method of making the thermistor body 4 in accordance with this embodiment will now be explained.

Preparation of Mixture

First, at least the polymer matrix and electrically conductive substance are kneaded together, so as to yield a mixture. Here, the low-melting organic compound mentioned above is preferably mixed therewith. When the organic compound is mixed therewith, the resulting thermistor body 4 is operable at a lower temperature. When ethylene homopolymer is mixed as the organic compound in particular, the thermistor body 4 is operable at a relatively low temperature on the order of 80°C to 100°C, for example.

The conventional PTC compositions providing thermistor bodies operable at a low temperature and the like have been poor in heat resistance, so that kinds of solder used for connecting external electrode terminals to such a thermistor body are limited to those capable of soldering at a relative low temperature. When the PTC composition is obtained by crosslinking the mixture further containing the above-mentioned low-melting organic compound, and a thermistor body is formed therefrom, thus obtained thermistor body is excellent in heat resistance while being operable at a low temperature. Therefore, when making a thermistor device from the thermistor body, it is not necessary to limit the kind of solder as mentioned above.

When the low-melting organic compound is also mixed, the mixing ratio between the polymer matrix and low-melting organic compound is preferably such that the low-melting organic compound is 0.05 to 0.5 with respect to the polymer matrix taken as 1 in terms of weight ratio. If the mixing ratio of the low-melting organic compound is lower than 0.05, the resistance change ratio of the resulting thermistor body becomes lower. If the mixing ratio of the low-melting organic compound exceeds 0.5, the thermistor body tends to deform when the low-melting organic compound melts, and the low-melting organic compound and the electrically conductive substance tend to become harder to mix.

The mixing ratio of the electrically conductive substance with respect to the total weight of the polymer matrix and low-melting organic compound is preferably as high as possible. For yielding an excellent PTC characteristic while exhibiting a relatively low resistance, however, the mixing ratio of the electrically conductive substance is preferably 25 to 45 vol%. If the mixing ratio of the electrically conductive substance is less than 25 vol%, the ohmic value at room temperature without operation is less likely to decrease sufficiently. If the mixing ratio of the electrically conductive substance exceeds 45 vol%, on the other hand, the change in ohmic value caused by temperature rise tends to become smaller, or uniform mixing is harder to achieve, whereby reproducible ohmic values tend to become unavailable.

When preparing a mixture, the above-mentioned additives such as antioxidant may be added thereto. Preferably, these additives are added by 1.0 wt% or less with respect to the total weight of all the organic ingredients in the polymer matrix, electrically conductive substance, and low-melting organic compound mixed when necessary.

The polymer matrix, the electrically conductive substance, the low-melting organic compound mixed as necessary, and the additives mixed as necessary can be kneaded at a temperature not lower than the melting point of the polymer matrix, preferably at a temperature higher than the melting point of the polymer matrix by 5°C to 40°C, for about 5 to 90 minutes by using a mill or the like. When mixing the low-melting organic compound as well, the polymer matrix and the low-melting organic compound may be initially melted and mixed, or they may be dissolved in a solvent and mixed.

Preparation of Shaped Article

Subsequently, the kneaded product (mixture) is held by electrodes from both sides, so that the electrodes are attached thereto under pressure, and then a sheet- or film-like article having a thickness of about 300 to 350 µm is prepared from the kneaded product. As the electrodes, metal foils such as Ni can be used. Preferably, each electrode has a thickness of about 25 to 35 µm. For example, the electrodes can be attached under pressure at a temperature on the order of 130°C to 240°C by using a hot press.

Preparation of Crosslinked Article

Next, the article is irradiated with an electron beam, so as to crosslink the polymer matrix contained in the article, thereby yielding a crosslinked article. Namely, using an electron accelerator, the article is irradiated with an electron beam having an acceleration voltage of at least 250 kV, preferably at least 1,000 kV, by a dose of 40 to 300 kGy, preferably 40 to 200 kGy, so as to crosslink the polymer matrix contained in the article. In order to prevent the temperature of the article from exceeding 70°C, preferably 60°C, it is preferred that the irradiation with the electron beam be divided into a plurality of operations. In the case where the irradiation is carried out by a plurality of operations as such, the electronbeamdoseperoperation is 40 kGyor less, for example, preferably 20 kGy or less. Preferably, both sides of the article are irradiated with the electron beam.

The mixture may be shaped into a sheet or film, so as to form an article, which may then be irradiated with an electron beam, so as to crosslink the polymer matrix, and thereafter electrodes may be attached to the resulting crosslinked article from both sides under pressure.

Method of Making Thermistor Device

The thermistor body 4 obtained by the above-mentioned method of making the thermistor body 4 is punched or cut into a predetermined form. Then, the external electrode terminals 8, 8 are bonded to respective surfaces of the electrodes 6, 6, whereby the thermistor device 2 is obtained.

It is preferred that the external electrode terminals 8, 8 be connected to the electrodes 6, 6 by using lead-free solder having a liquidus line not higher than 250°C, preferably not higher than 220°C. For example, a reflow, an iron, a hot plate, or the like is used at the time of soldering.

As mentioned above, the present invention irradiates an article with a specific electron beam by a specific dose, so as to crosslink the polymer matrix included in the article, thereby yielding a thermistor body. Here, even when the article has a relatively high density or relatively large thickness, a PTC composition and thermistor body having a relatively low ohmic value and excellent heat resistance and thermal shock resistance can be obtained. Though the reason therefor has not been elucidated yet in detail, the inventors consider that it is because the polymer matrix is crosslinked uniformly when the article is irradiated with a specific electron beam by a specific dose. Also, the present invention can make the article thicker as mentioned above, thereby improving pressure resistance in the resulting PTC composition, the thermistor body obtained therefrom, and the thermistor device using the same.

In the case where the article is irradiated with an electron beam having a high acceleration voltage of 1, 000 kV or more, an increased amount of electrons per irradiation can cause the article to raise its temperature remarkably and deform. In such a case, dividing the electron beam irradiation into apluralityof operations as mentioned above can keep the article from deforming, and provide a PTC composition excellent in heat resistance, thermal shock resistance, and the like, a thermistor body obtained therefrom, and a thermistor device using the same.

Irradiating the article with the electron beam from both sides can provide a PTC composition further excellent in heat resistance and thermal shock resistance, a thermistor body obtained therefrom, and a thermistor device using the same.

Though an embodiment of the present invention is explained in the foregoing, the present invention is not restricted to such an embodiment and can be carried out within the scope of the present invention, as defined in the appended claims.

For example, using an electron accelerator, a laminate in which a plurality of shaped articles are stacked can be irradiated with an electron beam having an acceleration voltage of at least 1,000 kV, preferably at least 2,000 kV. In this case, a single irradiation can crosslink the polymer matrix contained in the laminate yielded by stacking a plurality of shaped articles. As a result, the amount of processing per irradiation increases, thereby greatly cutting the cost.

As the acceleration voltage of an electron beam is made higher, the penetrability of the electron beam tends to improve. Therefore, when irradiating a laminate having a thickness of about 1,000 µm, in which three sheet-like articles are stacked, with an electron beam having an acceleration voltage of 1,000 kV, for example, the dose is preferably about 40 to 300 kGy. Even when irradiating a laminate made of a plurality of stacked articles with an electron beam, the electron beam irradiation may be divided into a plurality of operations with a lower electron beam dose per operation, in order to restrain the laminate from raising its temperature. Both sides of the laminate may be irradiated with the electron beam as well.

In the following, the present invention will further be explained with reference to detailed examples, which do not restrict the present invention.

Example 1

Mixed were 57 vol% of a linear low-density polyethylene (having a melting point of 122 °C and a specific gravity of 0.93) as a polymer matrix prepared by polymerization over a metallocene catalyst, 8 vol% of ethylene homopolymer (having a melting point of 99°C) as a low-melting organic compound, and 35 vol% of a filamentary nickel powder (whose average particle size was 0.5 to 1.0 µm) having spiky protrusions as electrically conductive particles. Phenol- and sulfur-type antioxidants were added to the mixture by 0.5 wt% with respect to the total amount of all the organic ingredients. Then, the resulting mixture was kneaded for 30 minutes in a mill while being heated to 150°C, whereby a kneaded product (mixture) was obtained.

The resulting kneaded product was held by a couple of Ni foils each having a thickness of 25 µm from both sides, the Ni foils were attached to the kneaded product under pressure by using a hot press set to 150°C, whereby an article having a thickness of 300 µm including the electrodes was obtained.

Both sides of thus obtained article were irradiated all at once with an electron beam having an acceleration voltage of 2, 000 kV with a dose of 40 kGy using an electron accelerator. Subsequently, the article was punched into a rectangle of 9 mm × 3. 6 mm. Then, Ni terminal plates each having a thickness of 0.1 mm were soldered to both main surfaces of the rectangular product by lead-free low-temperature solder (having a liquidus line at 204°C), whereby a thermistor device sample was obtained. In the following methods of evaluating the sample, different samples were used for respective evaluations.

Heat Resistance Evaluation

Heat resistance was evaluated by observing whether or not the thermistor device sample was deformed after being placed on a hot plate at 200°C for 5 minutes.

Gel Fraction Measurement

The gel fraction of the thermistor body sample obtained by peeling the electrodes off from the thermistor device sample was measured. The gel fraction of the body sample was measured by the above-mentioned gel fraction measuringmethod. A high value of the gel fraction indicates a high degree of crosslinking in the polymer matrix.

Thermal Shock Resistance Evaluation

Thermal shock resistance was evaluated by placing the thermistor device sample in an environment in which the temperature change between -40°C and +85°C was repeated for 200 times, and then measuring the electric resistance of the device at 25°C. Here, the environmental temperatures of -40°C and +85°C were maintained for 30 minutes each.

Resistance vs. Temperature Characteristic Evaluation

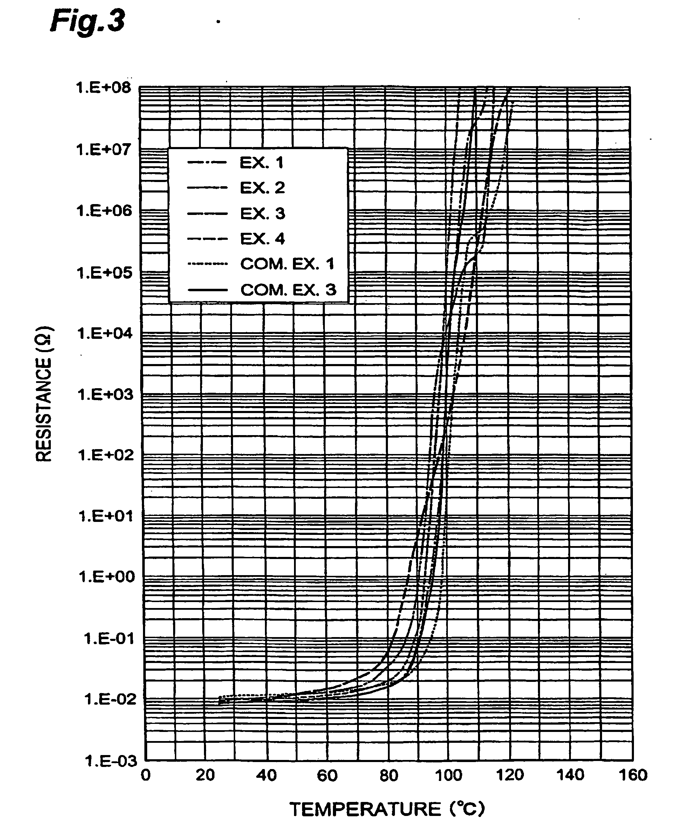

The resistance vs. temperature characteristic was evaluated as follows. First, the thermistor device was put into a constant-temperature chamber. Subsequently, (1) the constant-temperature chamber was heated to a predetermined temperature, (2) the constant-temperature chamber was sufficiently held at this temperature, and then (3) the ohmic value of the thermistor device was measured by four-probe method. Subsequently, the constant-temperature chamber was heated to a higher predetermined temperature, and the above-mentioned steps (1) to (3) were repeated, whereby an R-T curve was obtained within the range of 20°C to 115°C. Also, from this data, the electric resistance change ratio between the electric resistance value at 25°C and the maximum electric resistance value was calculated. The results are shown in Fig. 3 and Table 1.

**TABLE 1**

| | DOSE | ACCELERATION VOLTAGE | IRRADIATION DIRECTION | MATERIAL DENSITY | THERMAL SHOCK (mΩ) | R-T DIGIT | GEL FRACTION | THERMAL DEFORMATION | DOSE x ACCELERATION VOLTAGE |
|---|---|---|---|---|---|---|---|---|---|
| | kGy | kV | | g/cm³ | AFTER 200 CYCLES | | % | (OUTLOOK) | kGy kV |
| EX.1 | 40 | 2000 | ONE SIDE | 3.7 | 12-16 5 | 11.1 | 13.8 | NO | 60000 |
| EX,2 | 100 | 2000 | ONE SIDE | 3.7 | 12~15 | 11 | 28 | NO | 200000 |
| EX.3 | 200 | 2000 | ONE SIDE | 3.7 | 25~34 | 11 | 66.1 | NO | 400000 |
| EX.4 | 300 | 2000 | ONE SIDE | 3.7 | 29-31 | 11.1 | 66.6 | NO | 600000 |
| EX.6 | 200 | 260 | BOTH | 3.3 | 11~17 | 10.2 | 26 | NO | 100000 |
| EX.6 | 40 | 2000 | ONE SIDE | 3.3 | 10~13 | 10.0 | NOT MEASURED | NO | 80000 |
| EX.7 | 100 | 2000 | ONE SIDE | 3.2 | 8~11 | 10.6 | 10.0 | NO | 200000 |
| COMP.EX1 | NONE | - | - | 3.7 | 9~12 | 9.8 | NOT MEASURED | YES | --- |
| COMP.EX2 | NONE | - | - | 3.3 | 50~100 | 11.2 | UNMEASURABLE | YES | --- |
| COMP.EX3 | 20 | 2000 | ONE SIDE | 3.7 | 10~13 | 11.1 | UNMEASURABLE | YES | 40000 |
| COMP.EX.4 | 20 | 2000 | ONE SIDE | 3.8 | 20-40 | 10.3 | UNMEASURABLE | YES | 40000 |
| COMP.EX.5 | 400 | 2000 | ONE SIDE | 3.3 | 43~69 | 9.2 | >70 | NO | 800000 |
| COMP.EX.6 | 40 | 200 | ONE SIDE | 3.3 | 16~20 | 11.3 | UNMEASURABLE | YES | 8000 |
| COMP.EX.7 | 30 | 260 | ONE SIDE | 3.9 | 12~30 | NOT MEASURED | UNMEASURABLE | YES | 7500. |
| COMP.EX8 | 350 | 2000 | ONE SIDE | 3.7 | 30~86 | NOT MEASURED | >70 | NO | 700000 |
| COMP.EX9 | 350 | 250 | ONE SIDE | 3.7 | 40~65 | NOT MEASURED | 20 | NO | 87500 |

In Table 1, the electron beam dose is expressed in terms of kGy, where 1 kGy is a unit indicating the electron beam dose yielding an energy absorption of 1 J per 1 kg. The R-T digit refers to the value represented by log (Rmax/R25), where R25 is the ohmic value at 25°C, and Rmax is the maximum ohmic value in the R-T characteristic.

**Example 2**

A thermistor device sample was obtained in the same manner as with Example 1 except that the electron beam dose was set to 100 kGy and was divided into 5 irradiation operations with a dose of 20 kGy each. Thus obtained sample was evaluated as in Example 1. Results of various characteristics of Example 2 are listed in Table 1, whereas its R-T curve is shown in Fig. 3.

**Example 3**

A thermistor device sample was obtained in the same manner as with Example 1 except that the electron beam dose was set to 200 kGy and was divided into 10 irradiation operations with a dose of 20 kGy each. Thus obtained sample was evaluated as in Example 1. Results of various characteristics of Example 3 are listed in Table 1, whereas its R-T curve is shown in Fig. 3.

**Example 4**

A thermistor device sample was obtained in the same manner as with Example 1 except that the electron beam dose was set to 300 kGy and was divided into 15 irradiation operations with a dose of 20 kGy each. Thus obtained sample was evaluated as in Example 1. Results of various characteristics of Example 4 are listed in Table 1, whereas its R-T curve is shown in Fig. 3.

**Example 5**

A thermistor device sample was obtained in the same manner as with Example 1 except that the mixed amount of filamentary nickel powder was 30 vol%, the electron beam acceleration voltage was 250 kV, the electron beam dose was 200 kGy, both sides of the thermistor body sample were irradiated all at once, and no electrode terminals were soldered. Thus obtained sample was evaluated as in Example 1. Results of various characteristics of Example 5 are listed in Table 1.

**Example 6**

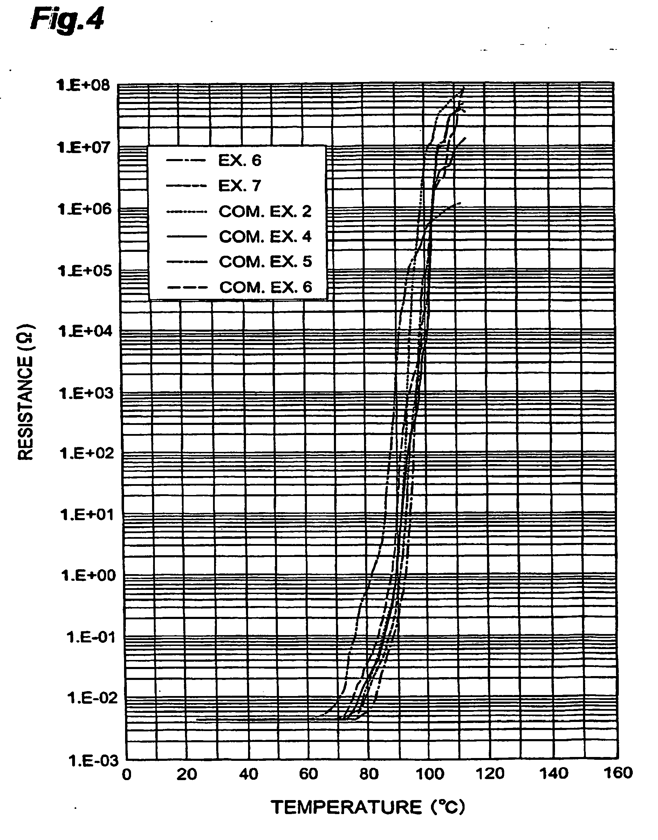

A thermistor device sample was obtained in the same manner as with Example 1 except that the mixed amount of filamentary nickel powder was 30 vol%, and no electrode terminals were soldered. Thus obtained sample was evaluated as in Example 1. Results of various characteristics of Example 6 are listed in Table 1, whereas its R-T curve is shown in Fig. 4.

**Example 7**

A thermistor device sample was obtained in the same manner as with Example 6 except that the electron beam dose was set to 100 kGy and was divided into 5 irradiation operations with a dose of 20 kGy each. Thus obtained sample was evaluated as in Example 1. Results of various characteristics of Example 7 are listed in Table 1, whereas its R-T curve is shown in Fig. 4.

**Comparative Example 1**

A thermistor device sample was obtained in the same manner as with Example 1 except that no electron beam was carried out, and no electrode terminals were soldered. Thus obtained sample was evaluated as in Example 1. Results of various characteristics of Comparative Example 1 are listed in Table 1, whereas its R-T curve is shown in Fig. 3.

**Comparative Example 2**

A thermistor device sample was obtained in the same manner as with Comparative Example 1 except that the mixed amount of filamentary nickel powder was 30 vol%. Thus obtained sample was evaluated as in Example 1. Results of various characteristics of Comparative Example 2 are listed in Table 1, whereas its R-T curve is shown in Fig. 3.

**Comparative Example 3**

A thermistor device sample was obtained in the same manner as with Example 1 except that the electron beam dose was 20 kGy. Thus obtained sample was evaluated as in Example 1. Results of various characteristics of Comparative Example 3 are listed in Table 1, whereas its R-T curve is shown in Fig. 3.

**Comparative Example 4**

A thermistor device sample was obtained in the same manner as with Comparative Example 2 except that the mixed amount of filamentary nickel powder was 30 vol %, and no electrode terminals were soldered. Thus obtained sample was evaluated as in Example 1. Results of various characteristics of Comparative Example 4 are listed in Table 1, whereas its R-T curve is shown in Fig. 4.

**Comparative Example 5**

A thermistor device sample was obtained in the same manner as with Example 1 except that the mixed amount of filamentary nickel powder was 30 vol%, and the electron beam dose was 400 kGy. Thus obtained sample was evaluated as in Example 1. Results of various characteristics of Comparative Example 5 are listed in Table 1, whereas its R-T curve is shown in Fig. 4.

**Comparative Example 6**

A thermistor device sample was obtained in the same manner as with Example 1 except that the mixed amount of filamentary nickel powder was 30 vol%, and the electron beam acceleration voltage was 200 kV. Thus obtained sample was evaluated as in Example 1. Results of various characteristics of Comparative Example 6 are listed in Table 1, whereas its R-T curve is shown in Fig. 4.

**Comparative Example 7**

A thermistor device sample was obtained in the same manner as with Example 1 except that the mixed amount of filamentary nickel powder was 30 vol%, the electron beam dose was 30 kGy, and the electron beam acceleration voltage was 250 kV. Thus obtained sample was evaluated as in Example 1. Results of various characteristics of Comparative Example 7 are listed in Table 1.

**Comparative Example 8**

A thermistor device sample was obtained in the same manner as with Example 1 except that the electron beam dose was 350 kGy. Thus obtained sample was evaluated as in Example 1. Results of various characteristics of Comparative Example 8 are listed in Table 1.

**Comparative Example 9**

A thermistor device sample was obtained in the same manner as with Example 1 except that the electron beam dose was 350 kGy, and the electron beam acceleration voltage was 250 kV. Thus obtained sample was evaluated as in Example 1. Results of various characteristics of Comparative Example 9 are listed in Table 1.

## Claims

1. A shaped article comprising a PTC composition based on (a) a crosslinked polymer matrix having a gel fraction of at least 10%, and (b) an electrically conductive substance, and **characterized in that** the shaped article is
obtainable by irradiating mixture of the polymer matrix and the electrically conductive substance with an electron beam having and acceleration voltage of at least 250 kV by a dose of 40 to 300 kGy, to crosslink the polymer matrix.

2. The shaped article according to claim 1 **characterized in that** said composition further comprises an organic compound having a melting point lower than that of said polymer matrix.

3. The shaped article according to claim 2, **characterized in that** said organic compound contains an ethylene homopolymer.

4. The shaped article according to any one of claims 1 to 3 **characterized in that** said (b) contains a filamentary nickel power having a spiky protrusion on a surface thereof.

5. The shaped article according to any one of claims 1 to 4, having a specific resistance ot 1 Ω-cm or less.

6. The shaped article according to any one of claims 1 to 5, **characterised in that** said (a) contains a linear, low-density polyethylene prepared by polymerization over a metallocene catalyst.

7. A method of making a shaped article comprising a PTC composition of claim 1 said method comprising:
a first step of preparing a mixture by mixing, at least, a polymer matrix and an electrically conductive substance;
a second step of yielding an article by shaping said mixture; and
a third step of irradiating said article by a dose of 40 to 300 kGy with an electron beam having an acceleration voltage of at least 250 kV.

8. The method according to claim 7, wherein an organic compound having a melting point lower than that of said polymer matrix is further mixed in said first step.

9. The method according to claim 8, wherein, as said organic compound having a melting point lower than that of said polymer matrix, an organic compound containing an ethylene homopolymer is mixed in said first step.

10. The method according to any one of claims 7 to 9, further comprising the step of setting an electron beam dose per operation such that said article is maintained at a temperature of 70°C or lower in said third step;
wherein said article is irradiated a plurality of times with said electron beam dose in each time in said third step.

11. The method according to any one of claims 7 to 10, wherein both sides of said article are irradiated with said electron beam in said third step.

12. The method according to any of claims 7 to 11, wherein, in said second step, said article is shaped into a plurality of plates, and said plates are stacked so as to form a laminate; and
wherein said laminate is irradiated with an electron beam having an acceleration voltage of at least 1,000 kV in said third step.

13. The method according to any one of claims 7 to 12, wherein, at least, said polymer matrix containing a linear, low-density polyethylene prepared by polymerization over a metallocene catalyst, and said electrically conductive substance are mixed so as to yield said mixture in said first step.

14. The method according to any one of claims 7 to 13, wherein, at least, said polymer matrix, and said electrically conductive substance containing a filamentary nickel powder having a spiky protrusion on a surface thereof are mixed so as to yield said mixture in said first step.

15. The method according to any one of claims 7 to 14, wherein said article is irradiated by a dose of 40 to 300 kGy with an electron beam having an acceleration voltage of at least 2, 000 kV in said third step.

16. A PTC thermistor body comprising the shaped article of claim 1.

17. The PTC thermistor body according to claim 16, wherein said composition further comprises an organic compound having a melting point lower than that of said polymer matrix.

18. The PTC thermistor body according to claim 16 or 17, wherein said composition contains, as said (b), a filamentary nickel powder having a spiky protrusion on a surface thereof.

19. The PTC thermistor body according to any one of claims 16 to 18, having a body density of at least 2.5 g/cm³.

20. The PTC thermistor body according to any one of claims 16 to 19. having a specific resistance of 1 Ω-cm or less.

21. The PTC thermistor body according to any one of claims 16 to 20, wherein said (a) contains a linear, low-density polyethylene prepared by polymerization over a metallocene catalyst.

22. The PTC thermistor body according to any one of claims 16 to 21, wherein an operable temperature range based on a resistance vs. temperature characteristic of said body is 80°C to 100°C.

23. The PTC thermistor body according to claims 16 and 17, wherein said electrically conductive substance contains electrically conductive particles with spiky protrusions, made of nickel metal.

24. A thermistor device comprising:
(1) the PTC thermistor body of claim 16, and
(2) respective electrodes formed on both sides of said PTC thermistor body.

25. The thermistor device according to claim 23, further comprising respective external electrode terminals connected to surfaces of said electrodes with lead-free solder having a liquidus line at 250°C or lower.

## Patentansprüche

1. Geformter Körper, umfassend eine PTC-Zusammensetzung basierend auf (a) einer vernetzten Polymermatrix, die einen Gelanteil von mindestens 10% hat, und (b) einer elektrisch leitfähigen Substanz, und dadurch charakterisiert, dass der geformte Körper erhältlich ist durch Bestrahlen einer Mischung aus der Polymermatrix und der elektrisch leitfähigen Substanz mit einem Elektronenstrahl, welcher eine Beschleunigungsspannung von mindestens 250 kV bei einer Dosis von 40 bis 300 kGy hat, um die Polymermatrix zu vernetzen.

2. Geformter Körper gemäß Anspruch 1, dadurch charakterisiert, dass die Zusammensetzung weiterhin eine organische Verbindung umfasst, welche einen Schmelzpunkt hat, der niedriger als der der Polymermatrix ist.

3. Geformter Körper gemäß Anspruch 2, dadurch charakterisiert, dass die organische Verbindung ein Ethylenhomopolymer enthält.

4. Geformter Körper gemäß einem der Ansprüche 1 bis 3, dadurch charakterisiert, dass in (b) faserförmiges Nickelpulver enthalten ist, welche spitze Vorsprünge auf einer Oberfläche davon haben.

5. Geformter Körper gemäß einem der Ansprüche 1 bis 4, einen spezifischen Widerstand von 1 Ω-cm oder weniger habend.

6. Geformter Körper gemäß einem der Ansprüche 1 bis 5, dadurch charakterisiert, dass in (a) ein lineares Polyethylen mit niedriger Dichte enthalten ist, hergestellt durch Polymerisation in Gegenwart eines Metallocenkatalysators.

7. Verfahren zur Herstellung eines geformten Körpers umfassend eine PCT-Zusammensetzung gemäß Anspruch 1, worin die Methode umfasst:
einen ersten Schritt der Herstellung einer Mischung durch Mischen von mindestens einer Polymermatrix und einer elektrisch leitfähigen Substanz;
einen zweiten Schritt des Erhaltens eines Körpers durch Formen dieser Mischung; und
einen dritten Schritt des Bestrahlens dieses Körpers mit einer Dosis von 40 bis 300 kGy mit einem Elektronenstrahl, welcher eine Beschleunigungsspannung von mindestens 250 kV hat.

8. Verfahren gemäß Anspruch 7, worin weiterhin eine organische Verbindung, welche einen Schmelzpunkt hat, der niedriger als der Schmelzpunkt der Polymermatrix ist, im ersten Schritt vermischt wird.

9. Verfahren gemäß Anspruch 8, worin als die organische Verbindung, welche einen Schmelzpunkt hat, der niedriger ist als der der Polymermatrix, eine organische Verbindung, welche ein Ethylenhomopolymer enthält, im ersten Schritt vermischt wird.

10. Verfahren gemäß einem der Ansprüche 7 bis 9, weiter umfassend den Schritt des Einstellens der Elektronenstrahldosis pro Arbeitsgang derart, dass der Körper im dritten Schritt bei einer Temperatur von 70°C oder weniger gehalten wird;
worin der Körper im dritten Schritt jeweils mehrfach mit der Elektronenstrahldosis bestrahlt wird.

11. Verfahren gemäß einem der Ansprüche 7 bis 10, worin im dritten Schritt beide Seiten des Körpers mit dem Elektronenstrahl bestrahlt werden.

12. Verfahren gemäß einem der Ansprüche 7 bis 11, worin im zweiten Schritt der Körper in eine Vielzahl von Platten geformt wird, und worin diese Platten gestapelt werden, um ein Laminat bilden; und
worin das Laminat im dritten Schritt mit einem Elektronenstrahl mit einer Beschleunigungsspannung von mindestens 1000 kV bestrahlt wird.

13. Verfahren gemäß einem der Ansprüche 7 bis 12, worin mindestens die Polymermatrix, welche ein lineares Polyethylen mit niedriger Dichte enthält, hergestellt durch Polymerisation in Gegenwart eines Metallocenkatalysators, und die elektrisch leitfähige Substanz derart gemischt werden, dass sie die Mischung im ersten Schritt ergeben.

14. Verfahren gemäß einem der Ansprüche 7 bis 13, worin mindestens die Polymermatrix und die elektrisch leitfähige Substanz, welche faserartiges Nickelpulver enthält, welches spitze Vorsprünge auf einer Oberfläche davon hat, derart vermischt werden, dass sie die Mischung im ersten Schritt ergeben.

15. Verfahren gemäß einem der Ansprüche 7 bis 14, worin der Körper mit einer Dosis von 40 bis 300 kGy mit einem Elektronenstrahl bestrahlt werden, welcher im dritten Schritt eine Beschleunigungsspannung von mindestens 2000 kV hat.

16. PTC-Thermistorkörper, umfassend den geformten Körper von Anspruch 1.

17. Der PTC-Thermistorkörper gemäß Anspruch 16, worin die Zusammensetzung weiterhin eine organische Verbindung umfasst, welche einen Schmelzpunkt hat, der niedriger als der der Polymermatrix ist.

18. PTC-Thermistorkörper gemäß Anspruch 16 oder 17, worin die Zusammensetzung als (b) faserförmiges Nickelpulver enthält, welches spitze Vorsprünge auf einer Oberfläche davon hat.

19. PTC-Thermistorkörper gemäß einem der Ansprüche 16 bis 18, eine Körperdichte von mindestens 2,5 g/cm³ habend.

20. PTC-Thermistorkörper gemäß einem der Ansprüche 16 bis 19, einen spezifischen Widerstand von 1 Ω-cm oder weniger habend.

21. PTC-Thermistorkörper gemäß einem der Ansprüche 16 bis 20, worin in (a) ein lineares Polyethylen mit niedriger Dichte enthalten ist, hergestellt durch-Polymerisation in Gegenwart eines Metallocenkatalysators.

22. PTC-Thermistorkörper gemäß einem der Ansprüche 16 bis 21, worin der betriebsfähige Temperaturbereich, basierend auf einer Widerstand gegen Temperatur - Charakteristik des Körpers, von 80°C bis 100°C ist.

23. PTC-Thermistorkörper gemäß Ansprüchen 16 und 17, worin die elektrisch leitfähige Substanz elektrisch leitfähige Partikel mit spitzen Vorsprüngen enthält, hergestellt aus Nickelmetall.

24. Thermistorvorrichtung, umfassend:
(1) den PTC-Thermistorkörper gemäß Anspruch 16, und
(2) entsprechende Elektroden, gebildet auf beiden Seiten des PTC-Thermistorkörpers.

25. Thermistorvorrichtung gemäß Anspruch 24, weiter umfassend entsprechende externe Elektrodenterminals, verbunden mit den Oberflächen der Elektroden mit einem bleifreien Lötzinn mit einer Schmelzlinie von 250°C oder weniger.

## Revendications

1. Article formé comprenant une composition CTP sur la base de (a) une matrice de polymère réticulé ayant une fraction de gel d'au moins 10 % et (b) une substance électriquement conductrice, et **caractérisé en ce que** l'article formé peut être obtenu en irradiant un mélange de la matrice de polymère et de la substance électriquement conductrice par un faisceau d'électrons présentant une tension d'accélération d'au moins 250 kV par une dose de 40 à 300 kGy, afin de réticuler la matrice de polymère.

2. Article formé selon la revendication 1, **caractérisé en ce que** ladite composition comprend en outre un composé organique présentant un point de fusion inférieur à celui de ladite matrice de polymère.

3. Article formé selon la revendication 2, **caractérisé en ce que** ledit composé organique contient un homopolymère d'éthylène.

4. Article formé selon l'une quelconque des revendications 1 à 3, **caractérisé en ce que** ladite substance (b) contient une poudre de nickel filamentaire présentant une protubérance en pointe sur une surface de celle-ci.

5. Article formé selon l'une quelconque des revendications 1 à 4, ayant une résistivité de 1 Ω-cm ou moins.

6. Article formé selon l'une quelconque des revendications 1 à 5, **caractérisé en ce que** ladite matrice
(a) contient un polyéthylène linéaire à faible densité préparé par polymérisation sur un catalyseur de métallocène.

7. Procédé de réalisation d'un article formé comprenant une composition CTP selon la revendication 1, ledit procédé comprenant:
une première étape consistant à préparer un mélange en mélangeant au moins une matrice de polymère et une substance électriquement conductrice,
une deuxième étape consistant à réaliser un article en façonnant ledit mélange, et
une troisième étape consistant à irradier ledit article par une dose de 40 à 300 kGy avec un faisceau d'électrons présentant une tension d'accélération d'au moins 250 kV.

8. Procédé selon la revendication 7, dans lequel un composé organique présentant un point de fusion inférieur à celui de ladite matrice de polymère est davantage mélangé dans ladite première étape.

9. Procédé selon la revendication 8, dans lequel, comme ledit composé organique présentant un point de fusion inférieur à celui de ladite matrice de polymère, un composé organique contenant un homopolymère d'éthylène est mélangé dans ladite première étape.

10. Procédé selon l'une quelconque des revendications 7 à 9, comprenant en outre l'étape consistant à régler une dose de faisceau d'électrons par opération de telle sorte que ledit article soit maintenu à une température de 70°C ou moins dans ladite troisième étape,
où ledit article est irradié une pluralité de fois par ladite dose du faisceau d'électrons à chaque fois dans ladite troisième étape.

11. Procédé selon l'une quelconque des revendications 7 à 10, dans lequel les deux côtés dudit article sont irradiés par ledit faisceau d'électrons dans ladite troisième étape.

12. Procédé selon l'une quelconque des revendications 7 à 11, dans lequel, dans ladite deuxième étape, ledit article est formé en une pluralité de plaques, et lesdites plaques sont empilées de façon à former un stratifié, et
dans lequel ledit stratifié est irradié par un faisceau d'électrons présentant une tension d'accélération d'au moins 1 000 kV dans ladite troisième étape.

13. Procédé selon l'une quelconque des revendications 7 à 12, dans lequel, au moins ladite matrice de polymère contenant un polyéthylène linéaire à faible densité préparé par polymérisation sur un catalyseur de métallocène et ladite substance électriquement conductrice sont mélangées de manière à obtenir ledit mélange dans ladite première étape.

14. Procédé selon l'une quelconque des revendications 7 à 13, dans lequel au moins ladite matrice de polymère et ladite substance électriquement conductrice contenant une poudre de nickel filamentaire présentant une protubérance en pointe sur une surface de celle-ci sont mélangées de manière à obtenir ledit mélange dans ladite première étape.

15. Procédé selon l'une quelconque des revendications 7 à 14, dans lequel ledit article est irradié par une dose de 40 à 300 kGy par un faisceau d'électrons présentant une tension d'accélération d'au moins 2 000 kV dans ladite troisième étape.

16. Corps de thermistance CTP comprenant l'article formé selon la revendication 1.

17. Corps de thermistance CTP selon la revendication 16, dans lequel ladite composition comprend en outre un composé organique présentant un point de fusion inférieur à celui de ladite matrice de polymère.

18. Corps de thermistance CTP selon la revendication 16 ou 17, dans lequel ladite composition contient, comme ladite substance (b), une poudre de nickel filamentaire présentant une protubérance en pointe sur une surface de celle-ci.

19. Corps de thermistance CTP selon l'une quelconque des revendications 16 à 18, ayant une masse volumique de corps d'au moins 2,5 g/cm³.

20. Corps de thermistance CTP selon l'une quelconque des revendications 16 à 19, ayant une résistivité de 1 Ω-cm ou moins.

21. Corps de thermistance CTP selon l'une quelconque des revendications 16 à 20, dans lequel ladite matrice (a) contient un polyéthylène linéaire à faible densité préparé par polymérisation sur un catalyseur de métallocène.

22. Corps de thermistance CTP selon l'une quelconque des revendications 16 à 21, dans lequel une plage de températures d'exploitation sur la base d'une caractéristique de la résistance en fonction de la température dudit corps va de 80 °C à 100 °C.

23. Corps de thermistance CTP selon les revendications 16 et 17, dans lequel ladite substance électriquement conductrice contient des particules électriquement conductrices ayant des protubérances en pointes, constituées de métal de nickel.

24. Dispositif à thermistance comprenant :
(1) le corps de thermistance CTP selon la revendication 16, et
(2) des électrodes respectives formées sur les deux côtés dudit corps de thermistance CTP.

25. Dispositif à thermistance selon la revendication 23, comprenant en outre des bornes d'électrodes externes respectives connectées aux surfaces desdites électrodes par une soudure exempte de plomb présentant une ligne de liquidus à 250°C ou moins.
